# EUROPEAN PATENT APPLICATION

(11) **EP 3 944 106 A1**
(43) Date of publication of application: **26.01.2022**
(21) Application number: 20187744.6
(22) Date of filing: 24.07.2020
(51) Int. Cl.: G06F 21/12, G06F 21/14

(54) **OBFUSCATING METHOD OF PROTECTING CODE**

(71) Applicant: Nagravision SA, 1033 Cheseaux-sur-Lausanne (CH)
(72) Inventor: PIRET, Eric, 1033 Cheseaux-sur-Lausanne (CH); DORÉ, Laurent, 1033 Cheseaux-sur-Lausanne (CH); DUBROVA, Serge, 1033 Cheseaux-sur-Lausanne (CH)
(74) Representative: Poindron, Cyrille

(57) **Abstract**

Obfuscating method of protecting code (10) having a plurality basic blocks (1) linked to each other by a set of functional relationships (2), a set of functional relationships defining a sequence of operations and decisions carried out by the code (10), the method comprising :
- creating said set of functional relationships (2) by associating a basic block (1) with at least one switching data (7), thereby defining a next basic block (1) to be processed,
- obfuscating the set of functional relationships (2) by replacing at least a part of said switching data (7) with opaque predicates (8), an opaque predicate dependent on at least an activation key (30), said switching data (7) derived from one of said opaque predicates (8).

## Description

### TECHNICAL FIELD

The present disclosure relates to the field of software obfuscation for protecting the software code from being modified or read, even visually, by malicious persons. Such software is preferably dedicated to Pay-TV field, for instance through applications running for TV-set, computers, multimedia tablets, smartphone and so on. This disclosure also relates to a computer program product for carrying out the obfuscating method, a device for implementing the obfuscating method and an implementation method for executing a code protected by the obfuscating method.

### BACKGROUND

Software is initially written in a high-level language by a computer programmer using programing instructions intelligible for human. The software high-level language is stored in a so-called source file. Within the computer, a compiler is used to convert the high-level language into an initial code executable for the targeted processor which is typically a CPU. This code can be regarded as a machine code stored in a binary format within a so-called object file. Such an object-file is stored in the memory of the computer, typically in a flash memory (e.g. EEPROM), a hard disk drive or any other persistent memory. The obfuscation is directed to the object file, especially to the binary format of the machine code. During the software execution, the computer operating system will execute the code either directly from the persistent memory, or after loading the code into its volatile memory. Regardless of the type of memory from which the code is executed, the computed has to put the code within a location where it is allowed to run the code by interpreting its commands.

Software can be subject to malicious attacks, such as reverse engineering attack, undertaken by external parties for several purposes. Some attacks may seek to modify the software, e.g. to bypass certain features or to add therein a malicious code segment, to copy the software or to read it in order to understand how it works.

To prevent such attacks, various techniques, defined as being part of software hardening, have been developed. One of them is known as "on-demand code decryption". According to this technique, some elements or segments of the code are delivered in an encryption form and are decrypted just prior to the execution of the software code or during the runtime. Typically, some functions are decrypted during code execution using a required decryption key. In addition, fake code can be substituted instead of the protected binary code.

The main issue of such a method lies in the fact that the achievement of certain operations, such as code encryption, substitutions or modifications, cannot be ensured onto all platforms, because some of them work with a specific operating system which prohibits any modification brought to the code. Therefore, decrypting an encrypted code segment or substituting a fake portion of code by the real initial portion cannot be carried out on such platforms.

Accordingly, there is a need for an alternate obfuscating solution which can be implemented on any platform in order to at least partially overcome the aforementioned issues and drawbacks. More specifically, such a solution should be able to protect the integrity of the software code, to prevent the code from being properly executed by unauthorized devices and keeping the code in an unintelligible form so that it remains non understandable in the event that it is visually read by a third party.

### SUMMARY OF THE SOLUTION

To address this concern, the present disclosure suggests, as a first aspect, an obfuscating method of protecting code having a plurality basic blocks linked to each other by a set of functional relationships, a functional relationship defining a sequence of operations and decisions carried out by the code. This method comprises :
- creating said set of functional relationships by associating a basic block with at least one switching data, thereby defining a next basic block to be processed,
- obfuscating the set of functional relationships by replacing at least a part of said switching data with opaque predicates, an opaque predicate dependent on at least an activation key, said switching data derived from one of said opaque predicates.

This newly approach mainly differs from the prior art in that it is based solely upon data. More specifically the present solution is able to render obscure the functional relationships between basic blocks by replacing at least a part of switching data, dedicated to guide the program flow from block to block, with opaque predicates that depend on at least an activation key.

Thanks to present solution, only side information upon data such as switching data, constants or parameters that can be typically stored in registers, such as a CPU registers, are affected. Therefore, the present solution allows to efficiently obfuscate a software or program code without requiring any modification of this code.

Accordingly, the present solution can be advantageously implemented onto any platform.

According to one embodiment, the code further comprises constants and the method further comprises using an opaque predicate to obfuscate at least a part of these constants.

According to another embodiment, at least one of said opaque predicates is a calculation function taking as input at least a first parameter resulting from at least said activation key, and providing as output said switching data, said first parameter being transient.

In a preferred embodiment, the first parameter is deleted after the opaque predicate has been calculated, preferably at the latest after using said switching data.

Preferably, at least a part of input of the calculation function is encrypted and has to be decrypted using at least said activation key before being used as input of said calculation function.

Still preferably, the first parameter is a secret resulting from a computation based on the activation key and at least an invariable data.

According to one embodiment, said invariable data is a digest resulting from a hash function applied onto at least a portion of the code.

According to a preferred embodiment, the first parameter is a portion of the secret and each opaque predicate is calculated on the basis of a first parameter resulting from a different portion of the secret.

In one embodiment, the calculation function of each opaque predicate is different from that of any other opaque predicate.

In an advantageous embodiment, the code is divided into a plurality of code segments, and the activation key of each code segment is different from that of any other code segment.

According to a second aspect, the present disclosure also relates to a computer program product comprising computer executable instructions for carrying out the obfuscating method according to any of embodiments of this method or according to any possible combination of these embodiments.

In a third aspect, the present disclosure relates to a device for implementing the aforementioned obfuscating method according to any of its embodiment or possible combination of its embodiments. This device comprises at least one memory for storing the code to be protected and at least one processor configured to :
- associate with each basic block at least one switching data defining a next basic block to be processed, and
- replace at least a part of said switching data by opaque predicates dependent on at least one activation key.

In a fourth aspect, the present disclosure relates to an implementation method for executing a code protected by the aforementioned obfuscating method according to any of its embodiment or possible combination of its embodiments, wherein the activation key is provided via a source external to the code or is extracted or derived from the code itself.

In one embodiment, the activation key is provided during the code execution.

According to another embodiment, at least one of the activation key and any other data, allowing to derive any switching data from said opaque predicates, is deleted after deriving said switching data, preferably at the latest after using said switching data.

Other embodiments and advantages will be disclosed in the detailed description.

### BRIEF DESCRIPTION OF THE DRAWINGS

The solution and the embodiments suggested in the present disclosure should be taken as non-limitative examples and will be better understood with reference to the attached figures in which :
Fig. 1 is an example of a flowchart that represents the sequence of operations and decisions performed by a software code,
Fig. 2 depicts the flowchart of Fig. 1 after having applied thereto a flattening operation,
Fig. 3 is a schematic illustration of the obfuscating method suggested in the present solution, and
Fig. 4 is a schematic depiction of a device for implementing the obfuscating method.

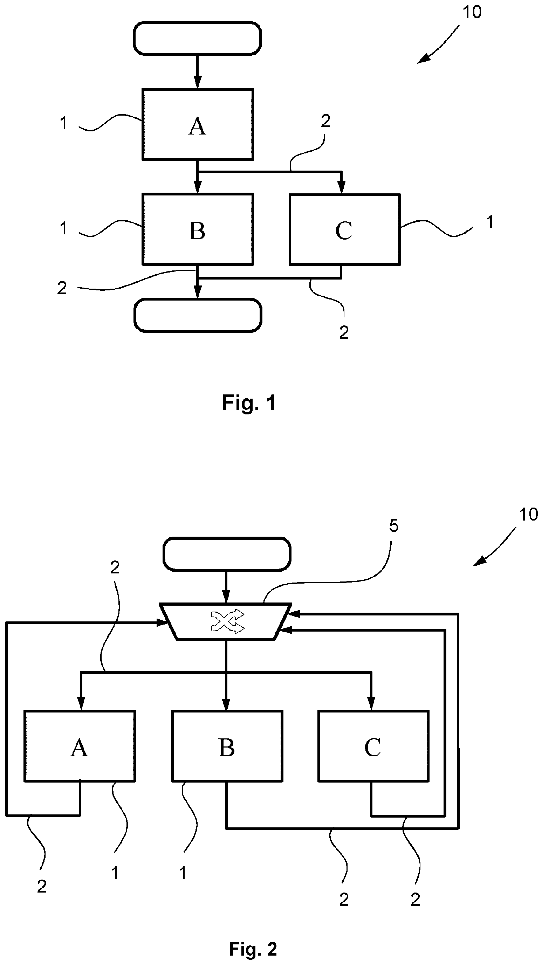

Referring to Fig. 1, the latter illustrates a graphical representation of the sequence of operations and decisions performed by a computer program, hereinafter referred to as software code, program code or merely code 10. Such a code may typically correspond to a source code written using a human-readable programming language. The example provided by Fig. 1 corresponds to a very basic code 10 given that it consists of only three basic blocks 1, denoted A, B and C. These basic blocks are linked to each other by a set of functional relationships 2 defining a sequence of operations and decisions carried out by the code 10.

In fact, the code 10 comprises a plurality of basic blocks, typically tens, hundreds or even thousands basic blocks 1. Each basic block 1 can be regarded as a portion of the code, in particular a portion of the source code, having certain useful proprieties that make it easy to analyze. For instance, a basic block may comprise at least one operation, function, comparison or any other kind of instruction allowing to undertake at least one action. The functional relationships 2 are mainly used to link the basic blocks. More specifically, each functional relationship 2 intends to link two potential successive basic blocks within the flowchart of the code 10. Typically, depending on a result provided by the basic block A, the code flow may continue either to the basic block B or to the basic block C, so as to further execute different actions within these blocks.

The flowchart of Fig. 1, which is an intelligible functional representation of the code 10, shows that this code (especially its source code) can be easily understandable by a programmer or any other skilled person. To prevent such an easy code analysis, a so-called flattening transformation of the code 10 is performed as schematically depicted on Fig. 2. Such a transformation especially intends to obfuscate the functional relationships 2 between the basic blocks 1 of the code 10. As shown in Fig. 2, the flattening operation can be regarded as being a technical transformation or process aiming to flatten the code, i.e. to achieve a reorganization of the basic blocks so they are all located at a same level. Accordingly, the hierarchical architecture between these blocks can be advantageously hidden.

To this end, all the functional relationships 2 are limited to link each basic block 1 to a so-called switch case 5. In other words, for each basic block, there is a first functional relationship for linking the switch case 5 to the input of the basic block and a second functional relationship for linking the output of this basic block to the switch case 5. Advantageously, a visually reading of the code 10, as depicted through the flowchart of Fig. 2, becomes unintelligible given that the hierarchical organization of the basic blocks within the code has been obfuscated by the flattening transformation process. Without the labels A, B, C still applied in Fig. 2 for the sake of understanding, there is even no guidance allowing to identify the first basic block 1 to process among the three blocks.

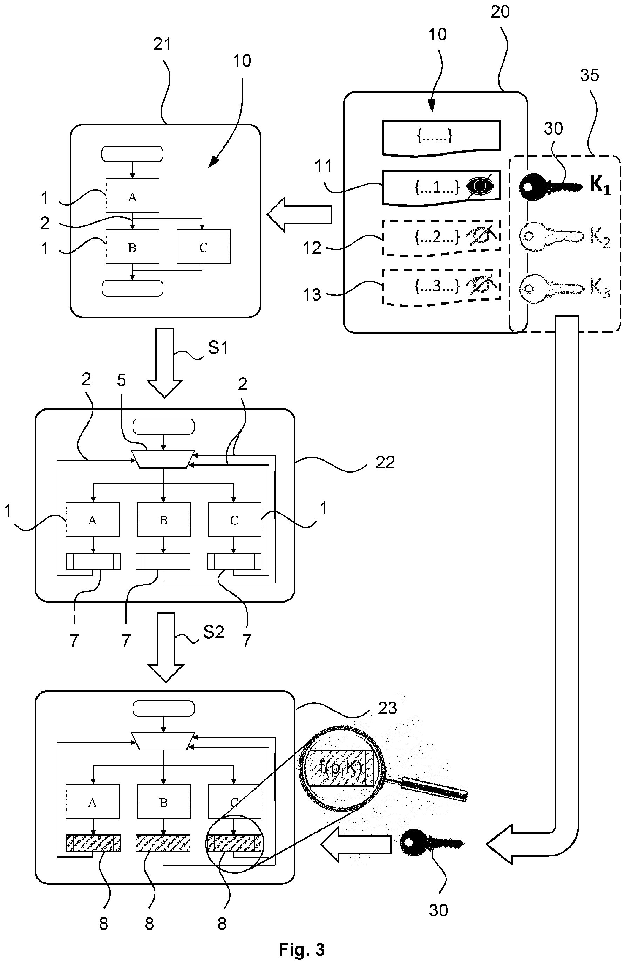

Referring to Fig. 3, it provides a schematic illustration of the obfuscating method suggested by the present solution which is part of software hardening. The code 10 may be generated or provided by a dedicated entity such as a content provider, preferably a secured content provider. According to an initial state 20, the code 10 preferably comprises at least one code segment 11 which can be regarded as being sensitive. In Fig. 3, this sensitive code segment 11 is marked by a pictogram showing a crossed-out eye, in contrast with the previous code segment which is not defined as sensitive code given that it is not marked with such a crossed-out eye. It should be noted that, in a particular embodiment, the code 10 may comprise several code segments 11, 12, 13. Such an embodiment will be described later in the present disclosure.

Since the code 10 is typically written in a source code language, it can be schematically represented through an intelligible flowchart or first block diagram 21 which, in the present example, corresponds to the illustration of Fig. 1.

In a first step S1, a flattening transformation is applied to the code 10, so as to obtain a flattened code 10 schematically depicted through the second block diagram 22 which corresponds to the illustration shown in Fig. 2. This step involves in creating the set of functional relationships 2 by associating, a basic block 1, with at least one switching data 7, thereby defining the next basic block to be processed. For example, the basic block labelled A may be associated with a switching data 7 configured to point towards the next basic block which, in the present case, is the basic block labelled B or C. The selection of the next basic block (B or C) typically depends on the result achieved by the basic block labelled A.

In a further step S2, an additional protection is applied to the code 10, as schematically shown through the illustration provided by the third block diagram 23 of Fig. 3. This step aims to obfuscate the set of functional relationships 2 by replacing at least a part of the switching data 7 with so-called opaque predicates 8. In the present example shown in Fig. 3, all of the switching data 7 have been replaced by opaque predicates 8. Each opaque predicate can be regarded as an obfuscated information through which it is impossible, as it stands, to know which is the next basic block to go to. The predicates are qualified as being opaque because if one statically analyzes the code 10, namely if one tries to visually understand it as it appears in its non-functional state, it is almost impossible to determine or to guess the information, e.g. the value or data, hidden behind each of these predicates. Furthermore, the opaque predicates 8 are preferably each dependent on at least an activation key 30. In other words, the activation key 30 is required to get access to the information hidden by the opaque predicates 8 or by at least a part of these opaque predicates. On the other hand, the switching data 7 is derived from one of the aforementioned opaque predicates 8.

Thanks to the present solution, the code is not modified during its obfuscation by the above-mentioned steps S1, S2. In contrast, only side information relating to data, such as switching data 7 that may typically stored in CPU registers, are affected by the present obfuscating method. Therefore, the present solution can be advantageously implemented on apparatuses whose operating system prohibits any modification of the code 10. In this regard, it should be noted that modification of registers remains an operation that is fully allowed by any operating system. Indeed, such registers can be regarded as simple memory locations, internal to the processor of the related apparatus.

Still advantageously, since the activation key 30 allows to retrieve the switching data 7 hidden behind the opaque predicates 8, it is possible to quickly retrieve the switching data thanks to a single and simple element. It is therefore not necessary to pre-process the protected code in order to make it work properly, but it can be processed at runtime. Accordingly, the method of the present solution will preferably determine on the fly, what data or value each opaque predicate 8 will successively take. Therefore, if the processor, in charge of running the code 10, is an authorized apparatus, the required activation key 30 may de delivered to the processor at runtime. Advantageously, the activation key 30 does not need to be used in advance and does need to be stored in advance, neither within the apparatus, nor in the code itself. Nevertheless, the activation the activation key could be derivable from the code 10 or a portion of the code. Preferably, the activation key 30 is provided by an external entity.

Since the activation key 30 is part of sensitive information, the time interval during which this key is on the client side can advantageously limited as much as possible. For this reason, the activation key 30 may typically be deleted as soon as it is no longer needed, preferably as soon as it has been used for retrieving the switching data and any other data protected by the opaque predicates 8. The activation key 30 may be provided to the client apparatus or processor having to run the code 10 during an initialization of the activation key, e.g. by an authorized entity such as a content provider, preferably a secured provider.

It should be also noted that the present obfuscating method transforms the code 10 to make it difficult to understand, while having an execution rigorously equivalent to that of the untransformed code.

In an embodiment and in addition to switching data, parameters or variables, the code 10 may further comprise constants. Each of these constants can be regarded as being an identifier associated with a fixed value or data. According to this embodiment, the method further comprises the use of at least one opaque predicate 8 to obfuscate at least a part of these constants. Accordingly, the opaque predicates 8 are not limited to be used for determining the next basic block to go to, and are therefore not necessarily assigned to the code flattening transformation.

Although at least one of the opaque predicates 8 could be the activation key 30 itself, according to a preferred embodiment at least one of the opaque predicates 8 is a calculation function. This calculation function may take as input at least a first parameter resulting from at least the activation key 30, and may provide as output the switching data 7. In other words, the first parameter may result or be derived from a computation based on the activation key 30, and then be used to determine the opaque predicate 8 by means of the calculation function. If the aforementioned function and first parameter are respectively denoted by the letters f and p, the calculation function may be denoted f(p). In this case, the parameter p will be the activation key 30 which may be denoted by the letter k, and the calculation function would be f(k). Preferably, the calculation function is denoted by the expression f(p, k), so that it depends both on a first parameter p (distinct from the key k) and the activation key 30. Alternatively, several parameters p (e.g. p₁, p₂, p₃, ...) may be included in the calculation function f. The parameter p, or at least one of the parameters p₁, p₂, p₃, ..., may be a constant while the other parameter k would be the activation key 30.

The calculation function f is not necessarily the same for all the opaque predicates 8. Indeed, this function f may be different for each opaque predicate 8 or a part of them, even if the activation key 30 remains the same for each function f.

Preferably, the first parameter p is a transient parameter. In other words, the life duration of this first parameter p is short, preferably as short as possible, so that it exists briefly and can be regarded as a transitory or temporary parameter. Still preferably, the first parameter p is deleted after the related opaque predicate 8 has been calculated. Preferably, such a deletion is done as soon as the related opaque predicate 8 has been calculated. In one embodiment, the first parameter p is deleted at the latest after using the switching data 7. Such a deletion may be performed by a dedicated deactivation function for example.

According to another embodiment, at least a part of input of the calculation function f is encrypted and has to be decrypted, for example using at least the activation key 30, before being used as input of the calculation function. For example, if the calculation function f(p) may depends from at least one first parameter p, the latter may be encrypted and therefore requiring a decryption before being used as input of the calculation function. Such a decryption may be carried out using the activation key 30.

In one embodiment, the activation key 30 may be used to decrypt or generate, e.g. via a one-way function, a secret allowing to calculate or determine the opaque predicates 8 or at least some of them. This secret is preferably decrypted or generated on the fly, i.e. at runtime, using the activation key 30.

According to a preferred embodiment, the first parameter p may be a secret resulting from a computation based on the activation key 30 and at least an invariable data. For example, the aforementioned invariable data may be a digest (hash value or checksum) resulting from a hash function, namely a one-way function, applied onto at least a portion or a segment of the code 10. In this case, the code 10 is preferably in a binary format. Accordingly, the activation key 30, which may be a secret element, may be used to obtain the first parameter p without necessarily needing a cryptographic process since a one-way function (i.e. a hash function) may be used to generate the first parameter p. In any case, i.e. by using an encryption mechanism and/or a one-way function, it should be noted that it is advantageously impossible to retrieve the activation key 30 from the first parameter p. Additional parameters such as constants, preferably difficult to guess, could further be added to the computation of this secret.

In one embodiment, the opaque predicates 8 may depend on a data table or a data list resulting from a cryptographic calculation. Such a data table or data list may be used as first parameter p to determine the opaque predicates 8. For example, the opaque predicates may be determined by a re-composition or a reconstruction based on certain data of the data table or data list.

According to one embodiment, the first parameter p is a portion of the secret and each opaque predicate 8 is calculated on the basis of such a first parameter p resulting from a different portion of the secret. For example, the secret allowing to determine the opaque predicates 8 may be obtained from the activation key 30. Typically, this secret may be much longer, in terms of digits, than the activation key. Accordingly, a first portion of this secret may be used as parameter (e.g. as key) to determine one of the opaque predicates 8. A second portion (at least partly different from the first portion) of this secret may be used in the same way to determine another opaque predicate 8. For example, the first portion may comprise the ten first digits of the secret and the second portion the ten next digits of this secret. Typically, the number of secret portions may correspond to the number of opaque predicates, so that each opaque predicate may be calculated using a different portion of the secret in order to get the related switching data 7. Accordingly, the secret may be split into several chunks or portions, each of them being usable to process one specific opaque predicate 8 of the code 10.

Preferably, the calculation function of each opaque predicate 8 is different from that of any other opaque predicate. Such an embodiment allows to further increase the obfuscation of the code 10.

According to another embodiment which is also schematically depicted in Fig. 3, the code 10 is divided into a plurality of sensitive code segments 11, 12, 13. Since such a partition is optional, code segments 12, 13 has been drawn using a dashed line. Furthermore, the activation key 30 of each code segment is different from that of any other code segment. More specifically, the first sensitive code segment 11 may require a first activation key K1, the second sensitive code segment 12 may require a second activation key K2, and so on. For the same reason as that mentioned before, the second and third activation keys K2, K3 relating to the optional code segments have been drawn using a clearer line. As depicted in Fig. 3, it should be noted that there is one initial segment or an initial portion of the code 10 which is not regarded as being sensitive. This initial segment may be used as starting segment for initiating the process allowing to run the code from the activation key 30 or from at least one of the first, second and third activation key K1, K2, K3 shown in Fig. 3.

Advantageously, such an embodiment allows to restrict the access to certain code segments 11, 12, 13 instead of providing access to the entire code 10. For example, if a client apparatus or processor is only authorized to access to a single first module of a software, because it did not subscribe to the other modules or for any other reasons, this embodiment allows to efficiently limit its access to this first module by providing the related activation key K1 only. Accordingly, the other modules requiring e.g. the activation keys K2 and K3 will advantageously remain inaccessible for unauthorized apparatus.

In one embodiment, the plurality code segments 11, 12, 13 comprises a main code segment, such as the code segment 11 for instance. This main code segment is configured to be activated using a main activation key, which in this example would be the activation key K1. The activation key K2, K3 of each other code segment 12, 13 may be derived from the main activation key K1, for instance by means of at least one dedicated function using at least the main activation key K1 as input parameter. For example, the sub-keys K2 and K3 may be derived through the following expressions: K2=f₁(K1) and K3=f₂(K1). Alternatively, the sub-key K3 may depends on K2 through an expression such as K3=f₁(K2). Other functions or expressions, e.g. comprising additional parameters, may be used to derive the sub-keys K2 and K3 from the main activation key K1.

According to a second aspect, the present solution relates to a computer program product comprising computer executable instructions for carrying out the obfuscating method according to any of embodiment of the obfuscating method disclosed above, or according to any possible combination of embodiments of this method. Typically, the computer program product may be a computer program including computer code arranged to instruct a computer or any programmable apparatus, to perform the functions of one or more of the various embodiments of the method described above.

The computer program product may further refer to any memory support suitable for storing such a computer program. Such a memory support may be a ROM i.e. a Read-Only-Memory or any derived memory such as flash memory, PROM, EPROM, EEPROM, UVPROM, a RAM i.e. a Random-Access-Memory or similar such as DRAM, SRAM, SDRAM, provided in any form factor such as memory cards, hard disk drive, solid-state drives, USB sticks, dongle or any other form of storage or mass storage.

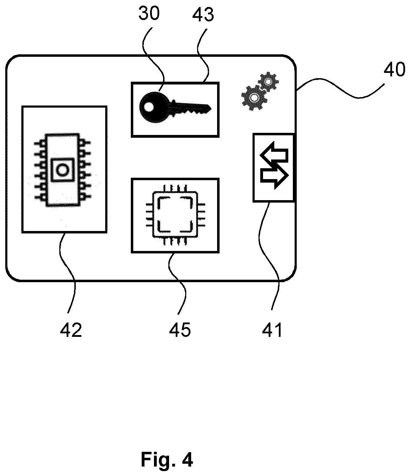

In a third aspect schematically depicted in Fig. 4, the present solution relates to a device 40 for implementing the obfuscating method according to any of its embodiments or according to any possible combination of these embodiments. This device 40 comprises at least one memory 42, for storing the code 10 to be protected, and at least one processor 45. The latter is preferably configured :
- to associate with each basic block 1 at least one switching data 5 defining a next basic block 1 to be processed, and
- to replace at least a part of said switching data 7 by opaque predicates 8 dependent on at least one activation key 30.

To this end, this device may further comprise a cryptographic module 43 and a communication interface 41 for exchanging data with external entities. The device 40 may also be regarded as an obfuscating tool comprising a computer routine (software) executable by a CPU, such as the processor 45, and taking advantage of the computing infrastructure (hardware) of an existing environment. Accordingly, such an obfuscating tool may be easily implemented within a computer, a provider, smartphone or any other entity comprising at least the main components of the device 40.

In a fourth aspect, the present solution also relates to an implementation method for executing a code 10 protected by the obfuscating method according to any of its embodiments or according to any possible combination of the embodiments of this obfuscating method. In this implementation method, the activation key 30 is provided via a source 35 external to the code 10. Alternatively, the activation key 30 may be extracted or derived from the code 10 itself. The external source 35, shown in Fig. 3, may be a key provider, a content provider such as that providing the code 10, or any other entity preferably located within a secure environment. If such an entity is specifically designed to work as key provider, it may be linked to the device 40 via a communication channel for providing the activation key 30 involved in the obfuscating method. Communication exchanges between any entities are preferred secured communications, e.g. by means of a cryptographic process.

The implement method may further comprise additional steps such as determining :
- the value of the activation key 30, and
- the location where the activation key will be initialized,
- the code segment 11, 12, 13 associated to this key, and
- the location within the code 10 where the related code segment will be activated and deactivated or will be made operational and non-operational.

These parameters and steps may be part of an initialization or setting phase performed prior to the obfuscating method. To this end a setting file could comprise all the parameters and steps of such a setting phase. Once these parameters or steps have been defined, e.g. once the setting file has been run and is complete, the obfuscating tool or device 40 may execute the obfuscating method as disclosed in the present description.

Preferably, the activation key 30 is provided during the code execution, namely on the fly when the code 10 is run.

According to a preferred embodiment of the implementation method, the activation key 30 and/or any other data allowing to derive any switching data 7 from said opaque predicates 8 is deleted after deriving said switching data 7. The aforementioned other data could typically refer to the first parameter p and/or to any other parameter comprised in the calculation function f. Still preferably, such a deletion is performed at the latest after using said switching data 7. Thanks to such an embodiment, the time interval during which sensitive data may be accessible are advantageously limited, thus reducing the piracy risk in connection with such sensitive data.

The obfuscated code 10 resulting from the obfuscating method of the present solution may be implemented or loaded on any platform, typically any open platform or software system based e.g. on open standards. More specifically, it could be implemented or loaded into a client application, e.g. within an untrusted environment.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. An obfuscating method of protecting code (10) having a plurality basic blocks (1) linked to each other by a set of functional relationships (2), a set of functional relationship defining a sequence of operations and decisions carried out by the code (10), the method comprising :
- creating said set of functional relationships (2) by associating a basic block (1) with at least one switching data (7), thereby defining a next basic block (1) to be processed,
- obfuscating the set of functional relationships (2) by replacing at least a part of said switching data (7) with opaque predicates (8), an opaque predicate dependent on at least an activation key (30), said switching data (7) derived from one of said opaque predicates (8).

2. The method of claim 1, wherein the code (10) comprises constants and the method further comprises:
- using an opaque predicate (8) to obfuscate at least a part of said constants.

3. The method of any of preceding claims, wherein at least one of said opaque predicates (8) is a calculation function (f) taking as input at least a first parameter (p) resulting from at least said activation key (30), and providing as output said switching data (7), said first parameter (p) being transient.

4. The method of claim 3, wherein said first parameter (p) is deleted after the opaque predicate (8) has been calculated, preferably at the latest after using said switching data (7).

5. The method of claim 3 or 4, wherein at least a part of input of the calculation function (f) is encrypted and has to be decrypted using at least said activation key (30) before being used as input of said calculation function (f).

6. The method of any of claims 3 to 5, wherein said first parameter (p) is a secret resulting from a computation based on said activation key (30) and at least an invariable data.

7. The method of claim 6, wherein said invariable data is a digest resulting from a hash function applied onto at least a portion of said code (10).

8. The method of claim 6 or 7, wherein the first parameter (p) is a portion of said secret and each opaque predicate (8) is calculated on the basis of a first parameter (p) resulting from a different portion of the secret.

9. The method of any of claims 3 to 8, wherein the calculation function (f) of each opaque predicate (8) is different from that of any other opaque predicate (8).

10. The method of any of preceding claims, wherein said code (10) being divided into a plurality of code segments (11, 12, 13), and the activation key (30) of each code segment is different from that of any other code segment.

11. A computer program product comprising computer executable instructions for carrying out the obfuscating method of any of preceding claims.

12. A device (40) for implementing the obfuscating method of any of claims 1 to 10, comprising at least one memory (42) for storing the code (10) to be protected and at least one processor (45) configured to :
- associate with each basic block (1) at least one switching data (7) defining a next basic block (1) to be processed, and
- replace at least a part of said switching data (7) by opaque predicates (8) dependent on at least one activation key (30).

13. An implementation method for executing a code (10) protected by the obfuscating method according to any of claims 1 to 10, wherein the activation key (30) is provided via a source external to the code (10) or is extracted or derived from the code (10) itself.

14. The implementation method of claim 13, wherein the activation key (30) is provided during code execution.

15. The implementation method of claim 13 or 14, wherein at least one of the activation key (30) and any other data (p), allowing to derive any switching data (7) from said opaque predicates (8), is deleted after deriving said switching data (7) and at the latest after using said switching data (7).
